# EUROPEAN PATENT APPLICATION

(11) **EP 4 442 641 A1**
(43) Date of publication of application: **09.10.2024**
(21) Application number: 24164683.5
(22) Date of filing: 19.03.2024
(51) Int. Cl.: C01B 32/00, H01M 4/04, H01M 4/133, H01M 4/1393, H01M 4/36, H01M 4/587, H01M 4/62, H01M 10/054, H01M 4/02

(54) **A PROCESS FOR PREPARING A HIGH PURITY HARD CARBON MATERIAL FOR SODIUM ION BATTERY APPLICATION**

(30) Priority: 06.04.2023 IN 202311025995
(71) Applicant: Haycarb Plc, Colombo 10 (LK)
(72) Inventor: UDAYAKUMARA, Mirissa Sinharakkarage Prasanna, 10 Colombo (LK); SHISHIRA, Jagodige Don, 10 Colombo (LK)
(74) Representative: Schaad, Balass, Menzl & Partner AG

(57) **Abstract**

The invention discloses a process of making high purity hard carbon material from coconut shell for sodium ion battery application. The process has lower carbon footprints as the alkali soluble lignin compounds of the coconut shells are extracted out during the de-mineralizing and are converted into solid mass which is further used for organic composting. The released volatile matter during the subsequent charcoaling and de-volatilization are directed for complete combustion for recovery of waste heat energy. The obtained hard carbon material has particle size D₅₀ from 1-15 micron and the metal impurities of Na, K, Ca, Mg, and Fe lower than 0.005% of each element. The naturally occurring interlayer width (d₀₀₂) of 0.37 nm - 0.39 nm in irregular crystal structure of coconut shell charcoal help to obtain good cycle life, high columbic efficiency of > 87%, and reversible capacity of 269-314 mAh/g in sodium ion battery applications.

## Description

### FIELD OF THE INVENTION

The present invention relates to a high purity hard carbon material for sodium ion battery application. More specifically, the present invention relates to an efficient and inexpensive process for preparing large quantities of a high purity hard carbon material from coconut shells. The said process to derive high purity hard carbon material is environment friendly with low carbon footprints.

### BACKGROUND OF THE INVENTION

To meet the increasing demand of energy production and energy storage in day-to-day applications, lithium and sodium ion batteries have attracted a great deal of attention. Lithium-ion batteries (LIBs) being efficient and emission free, provide ideal renewable energy solution for electronic vehicles. But, due to the high cost and limited availability of lithium sources and to mitigate the demand of high energy density battery requirement in the world, sodium ion batteries (SIBs) are considered as the best candidate for power sources. Sodium is widely available and exhibits similar chemistry to that of Li in LIBs. Therefore, SIBs are promising next-generation alternative for energy storage. But for practical development of efficient SIBs, suitable electrode material, suitable electrolytes, additives, and binders are equally important to be developed. Recently, sodiated layer transition metal oxides, phosphates and organic compounds have been introduced as cathode materials for SIBs. Simultaneously carbonaceous materials, transition metal oxides (or sulfides), and intermetallic and organic compounds are explored as anodes for SIBs.

In lithium-ion batteries, the commonly used anode material is graphite which is having 0.33 nm average interlayer spacing. However, for maintaining good performance, large automobile batteries require high durability of charge discharge cycle. Non-graphitizable carbon is suitable for use in the application, as it involves little particle expansion and contraction due to lithium/sodium ion doping and de-doping. In WO2017/060718A1, to achieve higher charge discharge capacity in sodium ion battery application, material comprising high purity hard carbon composite being suggested.

Conventionally, pitches, polymer compounds, plant based organic materials have been sourced for non-graphitizable hard carbon. However, the removal of high level of impurities from the petroleum pitch and coal base pitch having the property for making non-graphitizable hard carbon requires various treatments, and removal of them makes the process costly.

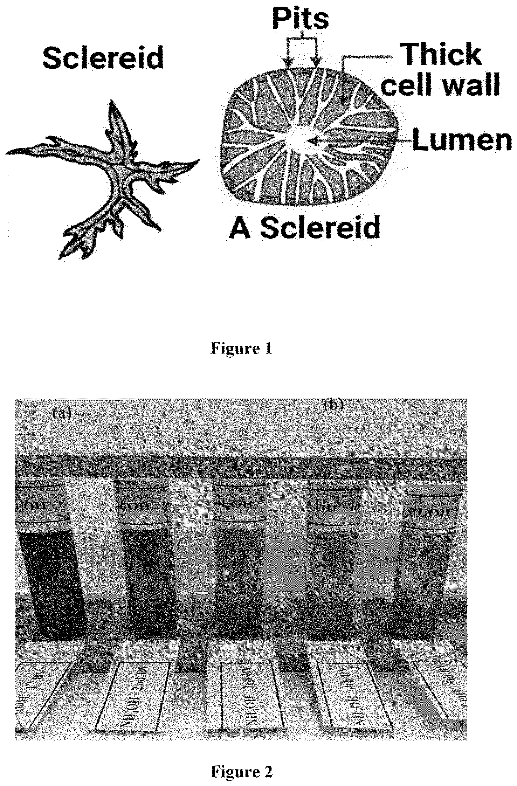

One of the most abundant raw materials to produce carbon at industrial scale is coconut shell. Coconut shell is mainly composed of lignified hard sclerenchyma tissue cells called sclereids (shown in Figure 1) embedded with alkali and alkaline earth metals Na, K, Ca, Mg and Fe, Si, P and S. It is known that during the pyrolysis process and heat treatment to make charcoal and specialized carbon materials the lingo cellulose material (Lignin) in sclereids decomposes to various hydrocarbons at different boiling temperature starting from 150 °C to 950 °C. However, for deriving high purity hard carbon material from coconut shell, the concentration of alkali and alkaline earth metals in the coconut shell needs to be reduced to very low values.

Few of the prior suggests methods to derive carbonaceous materials from different plant sources are discussed hereinafter.

IN201617003087A discloses a method of forming activated carbon by carbonizing coconut shell material through heating in a temperature range of 600-1000°C. However, the method does not involve de-mineralisation of coconut shell precursor material prior to heating.

IN202111001722A deals with making hard carbon from rice straw wherein the rice straw is cut, washed in distilled water, grounded to 100-300 microns and then soaked in 0.1-10 M acid solution for 1-24 h at 25-100 °C for further heat treatment. Similarly, IN202011048103A discloses a process for preparation of high-performance hard carbon electrode material for sodium ion batteries using cattle manure as biomass precursor comprising the steps of drying and grinding of biomass precursor and thereafter, treating it with 0.1 M to 5.0 M hydrofluoric acid solution (HF) for 1 h to 48 h, at a temperature between 25 to 60 °C followed by washing the material obtained with de-ionized water for further treatment. IN201641043941A deals with adsorbent carbon that is made from cashew nut shells. The shells are first burnt, followed by series of washing and drying steps wherein the shells are first washed with 0.1 N NaOH, dried and then washed with 0.01 N H₂SO₄ to remove the trace amounts of NaOH. However, no focus has been laid upon sequential de-mineralization of raw material in specific manner and nothing has been disclosed about the content of alkali and alkaline earth metals in the obtained carbon material which is required to ensure the high purity of the obtained carbon material.

US2015/0188137A1 describes making of anode material with high purity for better cycle life and lower resistance (i.e., first cycle irreversible capacity) from different plant derived carbon material. Further, the de-mineral treatment method used is limited to plant derived carbonaceous material from coffee beans in the working examples. Moreover, the comparative examples employ only hydrochloric acidic solution of pH 3 and above at room temperature to 100 °C, without using ammonia or any alkali for neutralization of demineralized material prior to de-taring. Further, for the de-mineralization of carbonaceous material, very small particles of size 100 µm is used without taking into consideration the material losses incurred during the commercial preparation of smaller particle size, making the process inefficient. Moreover, for the temperature treatment, maximum 1500 °C was used on 100 µm particles without considering difficulties to be faced in material handling in commercial operations.

Moreover, the prior art inventions about deriving hard carbon material from petroleum pitch and plant origin such as coffee bean residue and coconut shell for lithium ion and sodium ion battery anode do not describe their environmental impact such as release of hydrocarbon and CH₄ leading to increased carbon footprint.

It can be understood that there is a need of high purity hard carbon material for sodium ion batteries and an efficient and inexpensive process for preparing large quantities of such hard carbon material. Further there is a requirement of environment friendly process for producing high purity hard carbon material with low carbon footprints.

### SUMMARY OF THE INVENTION

This summary is provided to introduce a selection of concepts, in a simplified format, that are further described in the detailed description of the invention.

The present invention provides a process for preparing a high purity hard carbon material from a coconut shell precursor material, the high purity hard carbon material is used in a sodium ion battery, wherein, the process comprises the steps of:
a) drying the coconut shell precursor material;
b) crushing the dried coconut shell precursor material to obtain a crushed material of 600 - 3600 micron size;
c) screening the crushed material to remove fibres and very fine particles less than 0.6 mm to get fibre free screened particles;
d) de-mineralising the crushed and screened material by ultra-washing alternately with an acid solution, and with an alkali solution, followed by washing with alkali solution to obtain a washed material;
e) heat treatment of the washed material to remove volatile hydrocarbons and gases, wherein, the heat treatment is done at 500 °C - 1800 °C to get a heated material;
f) milling the heated material to get 1-20 micron size of a milled material and demagnetizing the milled material to obtain a de-magnetized material having Iron (Fe) content less than 10 ppm;
g) classifying the de-magnetized material to remove particles of size less than 1 micron to obtain a classified material having 6% maximum of less than 1 micron particles up to 20 micron as the largest particles in the particle size distribution;
h) vacuum drying the classified material to obtain a vacuum dried high purity hard carbon material having moisture content less than 300 ppm; and
i) packing the vacuum dried high purity hard carbon material by an online packer.

In the context of the invention the term "online packer" defines a packaging device which is constructed to collect the weight of the vacuum dried high purity hard carbon material of step h) and seal the vacuum dried high purity hard carbon material in a bag.

In a preferred embodiment of the invention the drying of the coconut shell precursor material in step a) is performed at 100 °C-140 °C.

Preferably the crushing in step b) is performed in a crusher selected from a hammer mill crusher, or a roller mill crusher.

In a preferred embodiment of the invention the screening of the crushed material in step c) is done by rotex screener.

Preferably the ultra-washing of step d) is performed alternately with 0.1N acid solution and 0.1 - 0.2 N alkali solution, followed by washing with alkali solution having normality of 0.1- 0.2 N to obtain a washed material.

In a preferred embodiment of the invention the acid solution in step d) is selected from HCl, and HNO₃ and the alkali solution is NH₄OH

Preferablythe ultra-washing with acid of step d) is performed at a temperature in the range of 120 °C -150 °C.

In a preferred embodiment of the invention the screened particles of step c) are neutralized with a dilute acid solution after ultra-washing to remove a reddish-brown fraction of lignin from a lignocellulose material of the coconut shell precursor material.

Preferably the reddish-brown fraction of lignin is extracted out, introduced into a settlement zone to settle down a lignin sludge, wherein, the lignin sludge is converted into a compost.

In a preferred embodiment of the invention the heat treatment of the washed material in step e) comprises of carbonizing the washed material in a carbonizing kiln at 500 °C -700°C, followed by de-volatizing the carbonized material at 900 °C -1000 °C, followed by high temperature heating of the de-volatilized material, wherein the high temperature heating is done at 1200 °C -1800 °C.

Preferably the volatile hydrocarbons and gases released during carbonization, de-volatilization and heat treatment are CH₄, volatile organic compounds (VOC), H₂ and CO, wherein CH₄, VOC, H₂, and CO are combusted in a combustion chamber into CO₂ and H₂O and the combustion energy is used for steam generation and to operate an electric turbine.

Milling of the heated material is done to get 1-20 micron size of a milled material and demagnetizing the milled material is done to obtain a de-magnetized material having Iron (Fe) content less than 10 ppm. This step helps in the reduction of iron metal impurities in the hard carbon material.

In a preferred embodiment of the invention the classified material of step g) consists or comprises of particles of size less than 1 micron below 2%, the particles of size 1-2 micron are 9 % -11 % and rest of the particles have size in range of 5-15 micron.A further aspect of the invention also provides a high purity hard carbon material obtained from a coconut shell precursor material, wherein, a particle size D₅₀ of the said hard carbon material in a range of 1 - 20 micron.

Preferably the particle size D₅₀ of the hard carbon material is in a range of 1 -15 micron.

In a preferred embodiment of the invention the hard carbon material comprises of a crystal structure with an average interlayer spacing of 200 planes (d002) and having 0.37 nm to 0.39 nm interlayer width, and the crystal structure is determined by powder X-ray diffraction.

Preferably the hard carbon material comprises of metal impurities of Na, K, Ca, Fe lower than 2.5 ppm, and metal impurities of Mg is 5-6 ppm.

In a preferred embodiment of the invention the hard carbon material comprises of oxygen (O) in a range of 0.29-0.51 %, nitrogen (N) in a range of 0.01-0.24 %, and hydrogen (H) in a range of 0.08-0.21%.

Preferably the oxygen to carbon ratio and hydrogen to carbon ratio is less than 0.01.

In a preferred embodiment of the invention a BET surface area of the hard carbon material is in a range of 10-14 m2/g.

Preferably the tap density of the hard carbon material is in the range of 0.77-0.85 g/cc.

A further aspect of the invention also provides a sodium ion battery anode comprising the high purity hard carbon material.

In a preferred embodiment of the invention the reversible capacity of the sodium ion battery anode is in the range of 269-314 mAh/g

Preferably the columbic efficiency of the sodium ion battery anode is 87 % during first cycle.

### OBJECTIVES OF THE PRESENT INVENTION

The main objective of the present invention is to provide an environment friendly and cost-effective process to prepare a high purity hard carbon material in large quantities.

Another objective of the present invention is to derive the high purity hard carbon material from easily available coconut shells.

Another objective of the present invention is to provide a high purity hard carbon anode material for sodium ion battery application.

### BRIEF DESCRIPTION OF DRAWINGS:

Figure 1: (a) structure of sclereid cell, (b) a cross section of sclereid.
**Figure 2****:** Fraction of dark brown coloured alkali soluble lignin in liquid Ammonia.
**Figure 3****:** Flow chart showing the process steps for the preparation of high purity hard carbon material from coconut sell precursor material.
**Figure 4****:** Complete flow chart showing the associated process steps for lignin extraction and complete combustion of volatile hydrocarbon and gases such CH₄, volatile organic compounds (VOC), H₂ and CO generated during the heat treatment.

### DETAILED DESCRIPTION OF THE INVENTION

For the purpose of promoting an understanding of the principles of the invention, reference will now be made to the embodiments in the specific language will be used to describe the same. It will nevertheless be understood that no limitation of the scope of the invention is thereby intended, such alterations and further modifications in the illustrated composition, and such further applications of the principles of the invention as illustrated therein being contemplated as would normally occur to one skilled in the art to which the invention relates. Unless otherwise defined, all technical and scientific terms used herein have the same meaning as commonly understood by one of ordinary skilled in the art to which this invention belongs. The composition, methods, and examples provided herein are illustrative only and not intended to be limiting.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods, and materials are now described. All publications mentioned herein are incorporated herein by reference.

The terminology and structure employed herein is for describing, teaching, and illuminating some embodiments and their specific features and elements and does not limit, restrict, or reduce the spirit and scope of the invention.

The present invention provides a process for preparing a high purity hard carbon material from a coconut shell precursor material, the high purity hard carbon material is used in a sodium ion battery. The process includes the steps of drying the coconut shell precursor material (100), to obtain a dried coconut shell precursor material before crushing to particle size 600 micron to 3600 micron, wherein the drying is performed at 100 °C-140 °C in hot air blowing, until the material is dried with < 10 % moisture.

Crushing the dried coconut shell precursor material (101), to obtain a crushed material having 90 % of particles in size 600 micron - 3600 micron, wherein the crushing is performed in a crusher selected from a hammer mill crusher, or a roller mill crusher.

Screening the crushed material (102), to remove fibres and very fine particles to get polished fibre free screened particles, wherein the screening of the crushed material is done by rotex screener.

The coconut shell precursor material can be purified to results in very low levels of alkali and alkaline earth metals by alternative acid and alkali washing at 120 °C -150 °C.

It was observed by the inventors of the present invention that the particle size ranging from 600 micron to 3600 micron of coconut shell precursor is easily demineralized to achieve < 2 ppm K, < 2.5 ppm Na, < 2.5ppm Ca and < 5-6 ppm Mg. This could further lower the process cost. Further, the particle size of 600 micron to 3600 micron is also easily carbonized and heat treated in environment friendly manner until milling to fine micron powder in the milling step.

In one feature of the present invention, de-mineralising of the crushed and screened material is done by ultra-washing (103), wherein the ultra-washing is performed with soaking the crushed and screened material into 0.1N HCl or 0.1 N HNO₃ acid at temperature in the range of 120 °C -150 °C, and then washing with 2-5 bed volumes of 0.1 - 0.2N NH₄OH, to remove alkali soluble lignin followed by precipitating the lignin into solid mass. This reduces the alkali metals such as potassium (K), Sodium (Na) to less than 10 ppm and alkali earth metals calcium (Ca), magnesium (Mg) to less than 10 ppm in the obtained washed particles. Treatment with alkali solution (0.1 to 0.2N) having pH > 10 in controlled conditions followed by neutralizing with dilute acid is done to remove reddish brown fraction of lignin in lignocellulose material of coconut shell. This also minimize the release of hydrocarbons and volatile gases into environment during the heating process which includes carbonization, de-volatilization, and high temperature heat treatment and help in reducing carbon footprints. These novel process steps are responsible for enhanced electrochemical performance of anode material developed with some rearrangement in the crystal structure of hard carbon due to the hydrolysis and removal of lignin monomers and dimers.

After ultra-washing, the washed particles of size 600 micron to 3600 micron are neutralized with a dilute acid solution to remove a reddish-brown fraction of lignin from a lignocellulose material of the coconut shell precursor material and to obtain a washed material. The reddish-brown fraction of lignin is extracted out, introduced into a settlement zone to settle down a lignin sludge, wherein, the lignin sludge is converted into a compost.

Solubilizing lignin in the ammonia during de-mineralization reduces the volatile hydrocarbon release during the carbonization and heat treatments, since the 10 % of volatile hydrocarbon fraction is removed in alkali washing step.

The heat treatment of the washed material is done at 500 °C - 1800 °C to remove volatile hydrocarbons and gases and to get a heated material, wherein the heat treatment comprises of carbonizing (104) the washed material in a carbonizing kiln at 500 °C -700 °C, followed by de-volatizing (105) the carbonized material at 900 °C -1000 °C, followed by high temperature heating (106) of the de-volatilized material.

The high temperature heat treatment is done at temperature ranging from 1200 °C to 1800 °C, preferably at 1550 °C. At this temperature, the surface modification of hard carbon material happens which results into better cycle life and lower irreversible capacity. During this process the non-graphitize carbon material is formed with reduce surface area (SA), tap density > 0.85 g/cc, d₀₀₂ > 0.38 nm and oxygen (O) and hydrogen (H) each to carbon ratio < 0.01.

The volatile hydrocarbons and gases released during carbonization, de-volatilization and heat treatment steps (104, 105, 106) are CH₄, volatile organic compounds (VOC), H₂ and CO, wherein CH₄, VOC, H₂, and CO are combusted in a combustion chamber of the flue gas into CO₂ and H₂O before releasing into the air. The heat energy generated by combustion energy is recovered and used for steam generation to operate an electric turbine which makes the process environmentally friendly.

Milling (107) and de-magnetization (108) of heat-treated carbon material in jet mills is performed to achieve D₅₀ of 1-15 micron without contaminating the milled hard carbon material with Fe from the mill. The Fe content is maintained < 10 ppm.

Classification (109) of the milled and de-magnetized material is performed with jet milling and VCC (Vizier cyclone classifier) to remove particles of size < 1 micron from the milled material in order to reduce the BET Surface area, which is contributed by the external surface area of the fine powder. With the removal of particles of size < 1 micron to at most 2% of the product, fine particles are maintained around 10% of particles between 1 micron to 2 micron range. In order to obtain better binding properties with good lamination of electrode, the target product having particles of size < 1 micron is < 2%, 1-2 micron particles around 10% and D₅₀ is 5-15 micron is maintained.

Vacuum drying (110) of the classified material is done to obtain a vacuum dried high purity hard carbon material having moisture content less than 300 ppm, since the moisture in hard carbon affects the making and final performance of the electrode, followed by packing (111) of the vacuum dried high purity hard carbon material by an online packer to avoid moisture pickup during the packing.

The present invention also provides, a high purity hard carbon material obtained from a coconut shell precursor material, wherein, a particle size D₅₀ of the said hard carbon material in a range of 1 -15 micron. The hard carbon material consists of a crystal structure with an average interlayer spacing of 200 planes (d₀₀₂) of 0.37 nm to 0.39 nm; wherein, the crystal structure is determined by powder X-ray diffraction.

The hard carbon material consists of metal impurities of Na, K, Ca, Fe lower than 2.5 ppm, and metal impurities of Mg is 5-6 ppm. The hard carbon material consists of oxygen (O) in a range of 0.29-0.51 %, nitrogen (N) in a range of 0.01-0.24 %, and hydrogen (H) in a range of 0.08-0.21%.

The BET surface area of the hard carbon material is in a range of 10-14 m²/g, and the tap density is in the range of 0.77-0.85 g/cc.

The present invention also provides, a sodium ion battery anode comprising of the high purity hard carbon material, wherein the reversible capacity of the said anode is in the range of 269-314 mAh/g, and the columbic efficiency of the anode is 87 % during first cycle.

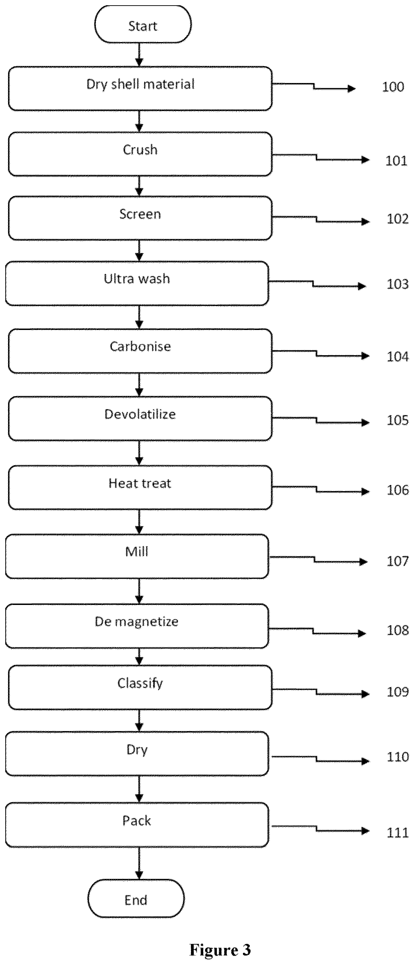

The process flow comprising of the steps required for preparing high purity hard carbon material from coconut shell precursor material is described in the figure 3.

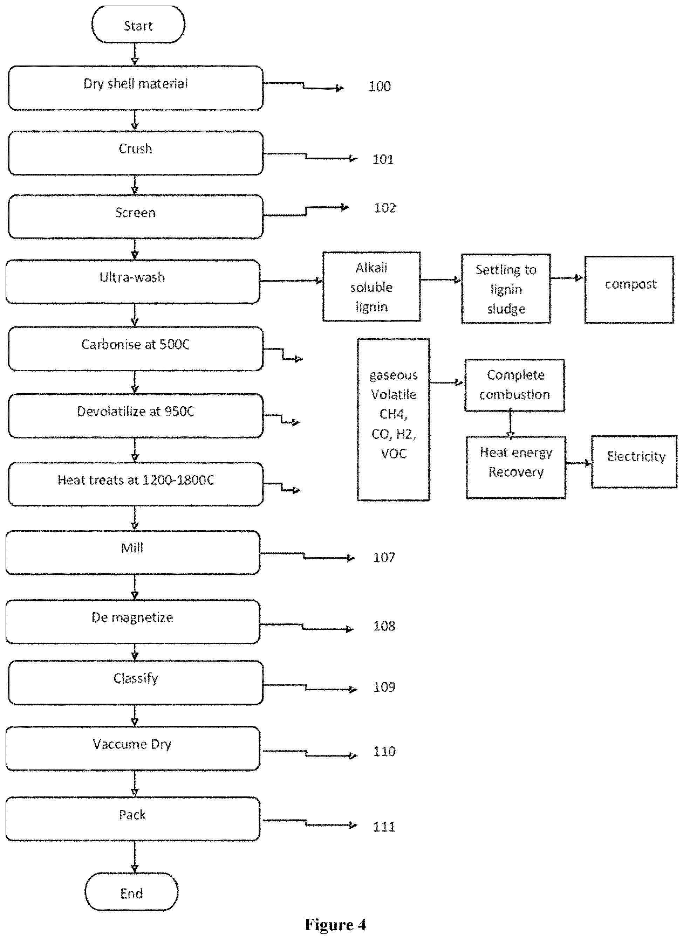

The complete process flow for preparing high purity hard carbon material along with conversion of lignin to compost and complete combustion of volatile gases is described in the figure 4.

### EXAMPLES

The present disclosure with reference to the accompanying examples describes the present invention. However, those of skill in the art should, in light of the present disclosure, appreciate that many changes can be made in the specific embodiments which are disclosed and still obtain a like or similar result without departing from the spirit and scope of the invention. It is understood that the examples are provided for the purpose of illustrating the invention only and are not intended to limit the scope of the invention in any way.

### REDUCTION IN VOLATILE CONTENT THROUGH DE-MINERALIZATION:

The total volatile matter content in the dried coconut shell material is in the range of 78 - 80 % and with 20 -22 % of fixed carbon content. During de-tarring or carbonization at around 500 °C and de-volatilization at around 950 °C the total volatile matter is released as the volatile hydrocarbon resulting into 20% of non-volatilized fixed carbon mass ultimately produced from the hard carbon with subsequent heat treatments at elevated temperatures ranging 1200 °C to 1800 °C to get lowest O:C ratio < 0.01.

The release of volatile hydrocarbon during hard carbon manufacture hugely affects the environment, and therefore the end battery markets need the sustainable green concept product and process for environment sustainability. In the present invention the research team critically considered possible reduction of carbon footprints by manufacture of environmentally friendly hard carbon.

The released volatile matters during carbonization and devolatilization are fully combusted in the combustion chambers into CO₂ and H₂O while taking the combustion energy for steam generation for electricity turbine. During the conventional carbonization at 500 °C release 36 kg of methane per MT of Charcoal produced which contribute to 20 times CO₂ equivalent of carbon footprints.

### WORKING EXAMPLES 1-5

In the present invention, the fraction of volatile matter contributing lignin is extracted out during the demineralizing process before the coconut shells are subjected for carbonization and de-volatilization processes. This reduces average 10 % of the volatile matter fraction as described in working examples in the table 1.

### WORKING EXAMPLE 1

No de-mineralizing treatment is carried out for coconut shell particles of size 3600 micron x 600 micron

### WORKING EXAMPLE 2

De-mineralizing treatment is carried out by taking 500 g of coconut shell granules containing particle of size 3600 micron x 600 micron, washing with 500 ml of 0.1N HCl and soaking for 45 minutes at 120 °C -150 °C and drain, with repeatedly rinsing with deionized water (DI) water three times, then soaking the material in 500 ml of 0.1N NH₄OH and repeating the process for 5 times, collecting the effluents of dark color extracted lignin for sedimentation (figure 2) for composting, the material is further neutralized with 500 ml of 0.1N hydrochloric acid before rinsing with 500 ml DI water in triplicate.

### WORKING EXAMPLE 3

Similar de-mineralizing treatment as of working example 2, except the concentration NH₄OH used 0.2N.

### WORKING EXAMPLE 4

Similar de-mineralizing treatment as of working example 2, except the concentration NH₄OH used 0.2N.

### WORKING EXAMPLE 5

Similar de-mineralizing treatment as of working example 2, except the concentration NH₄OH used 0.2N.

**Table 1 Carbon footprints contribution by coconut shell (CS) for estimated 600 MT Hard carbon production per year.**

| | Material | Volatile matter % | Fixed carbon content % | Carbon Footprints (MT/yr) | Carbon Footprints reduction (MT/yr) |
|---|---|---|---|---|---|
| Working example 1 | Coconut shell (CS) dry | 80 | 20 | 351 | 0 |
| Working example 2 | CS extracted with 0.1N NH₄OH | 79 | 21 | 306 | 45 |
| Working example 3 | CS extracted with 0.2N NH₄OH | 71 | 30 | 306 | 45 |
| Working example 4 | CS extracted with 0.2N NH₄OH | 70 | 30 | 306 | 45 |
| Working example 5 | CS extracted with 0.2N NH₄OH | 70 | 31 | 306 | 45 |

### METAL REDUCTION THROUGH DE-MINERALIZATION:

### WORKING EXAMPLE 6

De-mineralizing treatment is carried out by taking 500 g of coconut shell granules containing particle of size 3600 micron x 600 micron, washing with 500 ml of 0.1N HCl and soaking for 45 minutes at 120 °C -150 °C and drain, with repeatedly rinsing with deionized water (DI) water three times, then soaking the material in 500 ml of 0.2N NH₄OH and repeating the process for 5 times, collecting the effluents of dark color extracted lignin for sedimentation (figure 2) for composting, the material is further neutralized with 500 ml of 0.1N Hydrochloric acid before rinsing with 500 ml DI water in triplicate.

### WORKING EXAMPLE 7

Similar de-mineralizing treatment as of working example 6 is carried out for the smaller coconut shell granules of particle size 1700 micron x 420 micron.

### WORKING EXAMPLE 8

Similar de-mineralizing treatment as of working example 6 is carried out for the bigger particle size coconut shell granules of particle size 4500 micron x 2400 micron.

### WORKING EXAMPLE 9

Repeat de-mineralization of working example 6 was done to reduce the metal content.

### WORKING EXAMPLE 10

Further repeat de-mineralization of working example 9 was done for the confirmation of demineralizing step for achieving very low Na, K, Ca, Mg and Fe in the de-mineralized material prior to carbonization. The metal analysis is shown in the table 2.

**Table 2**

| | Particle size (µm) | pH | K (ppm) | Na (ppm) | Ca (ppm) | Mg (ppm) | Fe (ppm) |
|---|---|---|---|---|---|---|---|
| Working example 6 | 3600 x 600 | 7.1 | < 2.5 | < 2.5 | < 2.5 | 5.6 | < 2.5 |
| Working example 7 | 1700 x 420 | 7.0 | < 2.5 | < 2.5 | < 2.5 | 3.5 | < 2.5 |
| Working example 8 | 4500 x 2400 | 7.0 | 20 | 12 | 18 | 22 | 7 |
| Working example 9 | 3600 x 600 | 6.9 | < 2.5 | < 2.5 | < 2.5 | 5.0 | < 2.5 |
| Working example 10 | 3600 x 600 | 7.1 | < 2.5 | < 2.5 | < 2.5 | 6.0 | < 2.5 |

### CARBONIZATION AND HEAT TREATMENT:

De-mineralized coconut shell of working example 6, 9 & 10 is carbonized at 450 - 550 °C, to released volatile hydrocarbon matter subjected for full combustion to CO₂ and H₂O.

The carbonized material is treated at 940 - 960 °C for complete de-volatilization, released volatile hydrocarbon matter subjected for fully combustion to CO₂ and H₂O.

The de-volatilized material is subjected to high temperature heat treatment ranging from 1200 °C to 1800 °C and the resulted material is subjected to BET Surface area measurement, O:C ratio measurement, inter layer width (d₀₀₂) measurement using XRD before subject for milling and classifying to final particle size of hard carbon.

### WORKING EXAMPLE 11

De-volatilized material is heat treated under inert condition at 1275 °C and their BET surface area and ONH is measured, also the inter layer width (d₀₀₂) is measured using XRD.

### WORKING EXAMPLE 12

De-volatilized material is heat treated under inert condition at 1475 °C and their BET surface area and ONH is measured, also the inter layer width (d₀₀₂) is measured using XRD.

### WORKING EXAMPLE 13

De-volatilized material is heat treated under inert condition at 1575 °C and their BET surface area and ONH is measured, also the inter layer width (d₀₀₂) is measured using XRD.

### WORKING EXAMPLE 14

De-volatilized material is heat treated under inert condition at 1600 °C and their BET surface area and ONH is measured, also the inter layer width (d₀₀₂) is measured using XRD.

### WORKING EXAMPLE 15

De-volatilized material is heat treated under inert condition at 1800 °C and their BET surface area and ONH is measured, also the inter layer width (d₀₀₂) is measured using XRD.

The BET surface area, inter planar spacing of 200 planes and the percentage content of O, N and H in the particles of working example 11-15 after carbonization and heat treatment is shown in table 3.

**Table 3**

| | Particle size (µm) | Treatment Temperature (°C) | BET N₂ SSA (m²/g) | d₀₀₂ (nm) | O % | N % | H % |
|---|---|---|---|---|---|---|---|
| Working example 11 | 3600 x 600 | 1275 | 12 | 0.379 | 0.51 | 0.24 | 0.21 |
| Working example 12 | 3600 x 600 | 1475 | 10 | 0.371 | 0.51 | 0.01 | 0.09 |
| Working example 13 | 3600 x 600 | 1575 | 14 | 0.377 | 0.32 | 0.01 | 0.09 |
| Working example 14 | 3600 x 600 | 1600 | 11 | 0.379 | 0.33 | 0.01 | 0.08 |
| Working example 15 | 3600 x 600 | 1800 | 13 | 0.367 | 0.29 | 0.01 | 0.08 |

### MILLING AND CLASSIFYING:

Milling and classification of heat-treated particles of size 3600 micron x 600 micron size is done using jet milling and VCC (Vizier cyclone classifier) to remove <1 micron particles with target D₅₀ of 5-15 micron.

The tap density, BET surface area, inter planar spacing of 200 planes, and the D₅₀ particles size after milling and classifying for working example 16-20 is shown in table 4.

**Table 4**

| | Treatment Temperature (0 °C) | Tap Density (g/cc) | BET N₂ SSA (m²/g) | d₀₀₂ (nm) | D₅₀ (µm) |
|---|---|---|---|---|---|
| Working example 16 | 1275 | 0.77 | 12 | 0.379 | 8.2 |
| Working example 17 | 1475 | 0.85 | 10 | 0.371 | 8.3 |
| Working example 18 | 1575 | 0.83 | 14 | 0.377 | 8.3 |
| Working example 19 | 1600 | 0.82 | 11 | 0.379 | 8.8 |
| Working example 20 | 1800 | 0.85 | 13 | 0.367 | 7.4 |

### ELECTROCHEMICAL PERFORMANCE:

The high purity hard carbon material obtained from coconut shell carbonaceous material by novel environment friendly de-mineralizing, carbonizing, de-volatilizing and heat treatment process, is utilized as anode material in sodium ion battery and has shown physical and electrochemical performance for commercially potential sodium ion anode material as shown in table 5.

**Table 5**

| | Treatment Temperature (°C) | BET N₂ SSA (m²/g) | d₀₀₂ (nm) | 1st cycle CE % | Reversible capacity (mAh/g) |
|---|---|---|---|---|---|
| Working example 21 | 1275 | 12 | 0.379 | 85 | 289 |
| Working example 22 | 1475 | 10 | 0.371 | 87 | 314 |
| Working example 23 | 1575 | 14 | 0.377 | 80 | 280 |
| Working example 24 | 1600 | 11 | 0.379 | 87 | 269 |
| Working example 25 | 1800 | 13 | 0.367 | 82 | 285 |

## Claims

1. A process for preparing a high purity hard carbon material from a coconut shell precursor material, the high purity hard carbon material is used in a sodium ion battery, wherein, the process comprises the steps of:
a) drying the coconut shell precursor material;
b) crushing the dried coconut shell precursor material to obtain a crushed material of 600 - 3600 micron size;
c) screening the crushed material to remove fibres and very fine particles less than 0.6mm to get fibre free screened particles;
d) de-mineralising the crushed and screened material by ultra-washing alternately with an acid solution, and with an alkali solution, followed by washing with alkali solution to obtain a washed material;
e) heat treatment of the washed material to remove volatile hydrocarbons and gases, wherein, the heat treatment is done at 500 °C - 1800 °C to get a heated material;
f) milling the heated material to get 1-20 micron size of a milled material and demagnetizing the milled material to obtain a de-magnetized material having Iron (Fe) content less than 10 ppm;
g) classifying the de-magnetized material to remove particles of size less than 1 micron and to obtain a classified material with ≤6% of particles having a size of less than 1 micron;
h) vacuum drying the classified material to obtain a vacuum dried high purity hard carbon material having moisture content less than 300 ppm; and
i) packing the vacuum dried high purity hard carbon material by an online packer.

2. The process as claimed in claim 1, wherein in step a) the drying of the coconut shell precursor material is performed at 100 °C-140 °C.

3. The process as claimed in one of the claims 1 or 2, wherein, the dried precursor material is crushed to a particle size from 600 micron to 3600 micron, and crushing is performed in a crusher selected from a hammer mill crusher, a roller mill crusher.

4. The process as claimed in one of the claims 1 to 3, wherein in step c) the screening of the crushed material is done by rotex screener.

5. The process as claimed in one of the claims 1 to 4, wherein in step d) the ultra-washing is performed alternately with 0.1N acid solution and 0.1-0.2 N alkali solution and wherein preferably the acid solution is selected from HCl, and HNO₃ and the alkali solution is NH₄OH.

6. The process as claimed in one of the claims 1 to 5, wherein in step d) the ultra-washing with the acid solution is performed at a temperature in the range of 120 °C -150 °C.

7. The process as claimed in one of the claims 1 to 6, wherein in step e) the heat treatment comprises of carbonizing the washed material in a carbonizing kiln at 500 °C -700 °C, followed by de-volatizing the carbonized material at 900 °C -1000 °C, followed by high temperature heating of the de-volatilized material, wherein the high temperature heating is done at 1200 °C -1800 °C.

8. The process as claimed in claim 7, wherein in step e) the volatile hydrocarbons and gases released during carbonization, de-volatilization and heat treatment are CH₄, volatile organic compounds (VOC), H₂ and CO, wherein CH₄, VOC, H₂, and CO are combusted in a combustion chamber into CO₂ and H₂O and the combustion energy is used for steam generation and to operate an electric turbine.

9. The process as claimed in one of the claims 1 to 8, wherein the classified material consists or comprises of particles of size less than 1 micron below 2%, the particles of size 1-2 micron is 9 % -11 % and rest of the particles have size in range of 5-15 micron.

10. A high purity hard carbon material obtained from a coconut shell precursor material, wherein, a particle size D₅₀ of the said hard carbon material in a range of 1 - 20 micron.

11. The high purity hard carbon material as claimed in claim 10, wherein, the hard carbon material comprises of a crystal structure with an average interlayer spacing of 200 planes (d₀₀₂) and having 0.37nm to 0.39nm interlayer width, and the crystal structure is determined by powder X-ray diffraction.

12. The high purity hard carbon material as claimed in one of the claims 10 or 11, wherein the hard carbon material comprises of metal impurities of Na, K, Ca, Fe below than 2.5ppm, and metal impurities of Mg is 5-6 ppm.

13. The high purity hard carbon material as claimed in one of the claims 10 to 12, wherein the hard carbon material comprises of oxygen (O) in a range of 0.29-0.51 %, nitrogen (N) in a range of 0.01-0.24 %, and hydrogen (H) in a range of 0.08-0.21%, wherein oxygen to carbon and hydrogen to carbon ratio is less than 0.01.

14. The high purity hard carbon material as claimed in one of the claims 10 to 13, wherein a BET surface area of the hard carbon material is in a range of 10-14 m²/g.

15. The high purity hard carbon material as claimed in one of the claims 10 to 14, wherein the tap density of the hard carbon material is in the range of 0.77-0.85 g/cc.

16. A sodium ion battery anode comprising the high purity hard carbon material as claimed in one of the claims 1-15.

17. The sodium ion battery anode as claimed in claim 16, wherein a reversible capacity of the said anode is in the range of 269-314 mAh/g.

18. The sodium ion battery anode as claimed in one of the claims 16 or 17, wherein a columbic efficiency of the anode is 87 % during first cycle.
